# DEMANDE DE BREVET EUROPEEN

(11) **EP 4 385 792 A1**
(43) Date de publication de la demande: **19.06.2024**
(21) Numéro de dépôt: 23215300.7
(22) Date de dépôt: 08.12.2023
(51) Int. Cl.: B60L 7/18

(54) **KIT DE CONVERSION POUR TRANSFORMER UN VEHICULE THERMIQUE EN VEHICULE ELECTRIQUE, VEHICULE TRANSFORME ET PROCEDE AFFERENT**

(30) Priorité: 14.12.2022 FR 2213325
(71) Demandeur: TOLV, 38600 Fontaine (FR)
(72) Inventeur: RAGON, Benjamin, 38000 GRENOBLE (FR); BOURJAC, Luka, 38400 SAINT MARTIN D'HERES (FR); CHAUDOYE, Brice, 38400 SAINT MARTIN D'HERES (FR); DOURLENS, Sébastien, 38330 MONTBONNOT SAINT MARTIN (FR)
(74) Mandataire: Cabinet Didier Martin

(57) **Abrégé**

- L'invention concerne un kit de conversion pour transformer un véhicule thermique en véhicule électrique, ledit véhicule thermique comprenant un organe (1) d'émission d'un signal électrique d'accélérateur (10) et un dispositif d'antiblocage de sécurité (2), ledit kit étant caractérisé en ce qu'il comprend :
- un système de freinage régénératif,
- des moyens électroniques de commande auxquels est transmis ledit signal d'accélérateur (10),
- des moyens de détection (6) conçus pour être reliés audit dispositif d'antiblocage de sécurité (2),
- des moyens électroniques de contrôle (9) reliés auxdits moyens de détection (6) pour transmettre auxdits moyens électroniques de commande un signal électrique de coupure (20).

- Kit de conversion pour transformer un véhicule thermique en véhicule électrique.

## Description

La présente invention se rapporte au domaine technique général de l'automobile, et plus particulièrement à l'activité de transformation de véhicules à moteur à combustion en véhicules à moteur exclusivement électrique.

Plus précisément, l'invention concerne un kit de conversion pour transformer un véhicule routier à motorisation thermique en véhicule routier à motorisation électrique, ledit véhicule routier à motorisation thermique comprenant au moins un organe d'émission d'un signal électrique d'accélérateur présentant une valeur qui varie en fonction de la position d'un accélérateur mobile actionnable par l'utilisateur pour faire accélérer ledit véhicule, et un dispositif d'antiblocage de sécurité activable et désactivable.

L'invention concerne également un véhicule routier à motorisation électrique obtenu par transformation d'un véhicule routier à motorisation thermique, ledit véhicule routier à motorisation électrique comprenant au moins un organe d'émission d'un signal électrique d'accélérateur présentant une valeur qui varie en fonction de la position d'un accélérateur mobile actionnable par l'utilisateur pour faire accélérer ledit véhicule routier à motorisation électrique, et un dispositif d'antiblocage de sécurité activable et désactivable.

L'invention concerne enfin un procédé de transformation d'un véhicule routier à motorisation thermique en véhicule routier à motorisation électrique, ledit véhicule routier à motorisation thermique comprenant au moins un moteur thermique, un organe d'émission d'un signal électrique d'accélérateur présentant une valeur qui varie en fonction de la position d'un accélérateur mobile actionnable par l'utilisateur pour faire accélérer ledit véhicule, et un dispositif d'antiblocage de sécurité activable et désactivable.

Le transport routier contribue de façon majeure aux émissions de CO2, en raison du fait que le parc de véhicules automobiles est encore pour l'instant essentiellement composé de véhicules à moteur thermique. Afin de réduire ces émissions de CO2 qui contribuent au changement climatique, et réduire la pollution liée aux gaz d'échappement, une possibilité consiste à remplacer les véhicules thermiques du parc actuel par des véhicules électriques, c'est-à-dire des véhicules dont la propulsion est assurée par un moteur électrique et non par un moteur à combustion et explosion. Pour cela, la plupart des constructeurs automobiles proposent désormais des gammes de véhicules électriques qui sont à même de remplacer les véhicules thermiques. Les utilisateurs, qu'il s'agisse de particuliers ou de professionnels, peuvent ainsi désormais se procurer, lorsqu'ils désirent remplacer leur véhicule thermique, un nouveau véhicule électrique.

Toutefois, les véhicules électriques présentent généralement encore un coût relativement élevé, en tout cas significativement plus élevé que le prix de leurs équivalents thermiques, de sorte que même lorsqu'un véhicule thermique en fin de vie doit être remplacé, le choix de son propriétaire ne se portera pas nécessairement, pour cette raison économique, sur un véhicule électrique. En outre, le remplacement d'un véhicule thermique par un véhicule électrique neuf, indépendamment des considérations économiques évoquées ci-avant, n'est pas non plus sans poser de problèmes environnementaux, en raison en particulier d'un bilan carbone qui n'est pas nécessairement favorable, compte tenu des ressources et opérations requises pour la fabrication d'un véhicule électrique neuf. Enfin, le simple remplacement « naturel » d'un véhicule thermique en fin de vie par un véhicule électrique neuf ne permet pas un renouvellement du parc de véhicules routiers qui soit suffisamment rapide pour répondre aux enjeux climatiques et environnementaux actuels, lesquels nécessitent un remplacement accéléré des véhicules thermiques en circulation par des véhicules électriques.

C'est pourquoi, afin de répondre aux différentes problématiques exposées précédemment, il est désormais proposé, parallèlement à la production de véhicules électriques neufs, de convertir des véhicules thermiques déjà en circulation en véhicules électriques. Une telle opération de conversion, également désignée par l'appellation « retrofit électrique », permet de conserver l'essentiel des composants d'un véhicule thermique déjà existant, ce qui est évidemment favorable sur le plan environnemental mais également sur le plan économique.

Toutefois, une telle opération de conversion peut s'avérer complexe, et donc onéreuse, en raison notamment de la très grande variété des véhicules thermiques en circulation, dont les différences de construction et de conception rendent extrêmement difficile l'industrialisation des opérations de conversion. Ces opérations de conversion électrique sont d'autant plus délicates que le véhicule ainsi converti doit bien évidemment satisfaire à toutes les exigences en matière de sécurité d'utilisation, et doit pouvoir être homologué et certifié conforme aux différentes réglementations nationales et internationales applicables.

À cet égard, une difficulté particulière est rencontrée lorsque le véhicule thermique à convertir est équipé d'un dispositif d'antiblocage de sécurité (ABS), ce qui est le cas de très nombreux véhicules thermiques actuellement en circulation.

En effet, les véhicules électriques sont avantageusement dotés d'un système de freinage régénératif, qui permet de tirer profit des phases de ralentissement ou de freinage pour recharger la batterie et ainsi augmenter l'autonomie du véhicule. Plus précisément, cette régénération de puissance repose sur le principe général suivant :
- lorsque l'utilisateur presse la pédale d'accélération, la machine électrique, alimentée par la batterie, assure une fonction motrice et entraîne en rotation les roues du véhicule pour assurer le déplacement de ce dernier ;
- lorsque l'utilisateur relâche la pédale d'accélérateur et/ou presse la pédale de frein et/ou actionne manuellement des organes de contrôle dédiés (par exemple des leviers ou palettes portés par le volant ou le tableau de bord), la machine électrique fonctionne comme un générateur électrique qui alimente en électricité la batterie pour la recharger, tout en appliquant un couple de freinage aux roues du véhicule auxquelles la machine électrique est reliée.

Ainsi, lorsque l'utilisateur presse la pédale de frein pour ralentir ou stopper son véhicule électrique, il est particulièrement avantageux que le système de freinage régénératif soit activé pour participer à l'opération de freinage tout en permettant une récupération d'énergie. Cependant, lorsque le véhicule est équipé d'un dispositif d'antiblocage de sécurité (ABS), le déclenchement simultané du dispositif d'antiblocage de sécurité et du freinage régénératif peut conduire à un comportement inattendu du véhicule, induisant des risques potentiels en matière de sécurité (perte de contrôle du véhicule). Ce comportement potentiellement perturbant du véhicule provient notamment du couple négatif relativement fort induit par le déclenchement de la régénération de puissance conjugué aux à-coups de freinage associés à la régulation effectuée par l'ABS.

Bien évidemment, cette problématique du déclenchement concomitant du dispositif d'antiblocage de sécurité et du freinage régénératif est prise en compte par les constructeurs de véhicules électriques neufs, qui prévoient la mise en oeuvre de calculateurs embarqués exécutant des logiques de commande prédéterminées pour éviter tout problème de sécurité susceptible d'advenir en raison d'un déclenchement éventuel à la fois du dispositif d'antiblocage et du freinage régénératif.

En revanche, cette problématique s'avère particulièrement ardue à résoudre dans le cadre d'une opération de conversion électrique, en particulier si l'on souhaite mettre en oeuvre une opération de conversion électrique standardisée permettant de réutiliser en l'état le maximum de composants déjà présents sur le véhicule thermique à transformer. Ainsi, il n'existe en particulier pas à ce jour de méthode de conversion électrique qui permet facilement, quel que soit le véhicule concerné, et à coût maîtrisé, de transformer un véhicule thermique équipé d'un dispositif d'antiblocage sécurité (ABS) en un véhicule électrique toujours équipé du même dispositif d'antiblocage de sécurité.

Les objets assignés à l'invention visent par conséquent à proposer un nouveau kit de conversion, pour transformer un véhicule routier à motorisation thermique en véhicule routier à motorisation électrique, qui présente un caractère universel et permet, de façon extrêmement simple, rapide et bon marché, de transformer un véhicule thermique en un véhicule électrique tout en conservant des caractéristiques de freinage optimales en toutes circonstances.

Un autre objet de l'invention vise à proposer un nouveau kit de conversion, pour transformer un véhicule routier à motorisation thermique en véhicule routier à motorisation électrique, qui procure un haut niveau de sécurité d'utilisation et permet d'éviter toute intervention sur le circuit de freinage existant du véhicule thermique à transformer.

Un autre objet de l'invention vise à proposer un nouveau kit de conversion pour transformer un véhicule routier à motorisation thermique en véhicule routier à motorisation électrique dont la conception repose sur des principes techniques particulièrement fiables.

Un autre objet de l'invention vise à proposer un nouveau kit de conversion, pour transformer un véhicule routier à motorisation thermique en véhicule routier à motorisation électrique, de construction particulièrement simple, compacte et robuste.

Un autre objet de l'invention vise à proposer un nouveau kit de conversion, pour transformer un véhicule routier à motorisation thermique en véhicule routier à motorisation électrique, qui est particulièrement facile et rapide à installer, et qui évite en particulier toute intervention au niveau du dispositif d'antiblocage de sécurité déjà présent sur le véhicule thermique à transformer, et en particulier au niveau des composants mobiles de ce dernier.

Un autre objet de l'invention vise à proposer un nouveau kit de conversion, pour transformer un véhicule routier à motorisation thermique en véhicule routier à motorisation électrique, dont l'installation est particulièrement facile, rapide et ne nécessite pas de compétence particulière en électronique ou informatique embarquée.

Un autre objet de l'invention vise à proposer un nouveau véhicule routier à motorisation électrique, obtenu par transformation d'un véhicule routier à motorisation thermique, qui, tout en présentant un haut niveau de sécurité d'utilisation, notamment en matière de freinage, est particulièrement simple, rapide et bon marché à fabriquer.

Un autre objet de l'invention vise à proposer un nouveau procédé de transformation d'un véhicule routier à motorisation thermique en véhicule routier à motorisation électrique qui tout en étant particulièrement simple, rapide, universel et bon marché, permet d'obtenir un véhicule électrique présentant un haut degré de sécurité d'utilisation, notamment sur le plan du freinage.

Les objets assignés à l'invention sont atteints à l'aide d'un kit de conversion pour transformer un véhicule routier à motorisation thermique en véhicule routier à motorisation électrique, ledit véhicule routier à motorisation thermique comprenant au moins un organe d'émission d'un signal électrique d'accélérateur présentant une valeur qui varie en fonction de la position d'un accélérateur mobile actionnable par l'utilisateur pour faire accélérer ledit véhicule, et un dispositif d'antiblocage de sécurité activable et désactivable, ledit kit de conversion étant caractérisé en ce qu'il comprend au moins :
- un système de freinage régénératif activable et désactivable,
- des moyens électroniques de commande auxquels est transmis ledit signal électrique d'accélérateur pour qu'il commande l'activation ou la désactivation dudit système de freinage régénératif en fonction de ladite valeur dudit signal électrique d'accélérateur,
- des moyens de détection conçus pour être reliés audit dispositif d'antiblocage de sécurité afin de détecter l'activation de ce dernier,
- des moyens électroniques de contrôle reliés auxdits moyens de détection pour transmettre auxdits moyens électroniques de commande, en réponse à ladite détection de l'activation du dispositif d'antiblocage de sécurité, un signal électrique de coupure présentant une valeur prédéterminée à la place dudit signal électrique d'accélérateur présentant une valeur variable, ladite valeur prédéterminée étant établie pour que lesdits moyens électroniques de commande auxquels le signal électrique de coupure est transmis désactivent en réponse ledit système de freinage régénératif, indépendamment de la position dudit accélérateur.

Les objets assignés à l'invention sont également atteints à l'aide d'un véhicule routier à motorisation électrique obtenu par transformation d'un véhicule routier à motorisation thermique, ledit véhicule routier à motorisation électrique comprenant au moins un organe d'émission d'un signal électrique d'accélérateur présentant une valeur qui varie en fonction de la position d'un accélérateur mobile actionnable par l'utilisateur pour faire accélérer ledit véhicule routier à motorisation électrique, et un dispositif d'antiblocage de sécurité activable et désactivable, ledit véhicule routier électrique étant caractérisé en ce qu'il est pourvu d'un kit de conversion selon l'invention tel que défini ci-dessus, et dont les moyens de détection sont reliés audit dispositif d'antiblocage de sécurité afin de détecter l'activation de ce dernier.

Les objets assignés à l'invention sont enfin atteints par ailleurs à l'aide d'un procédé de transformation d'un véhicule routier à motorisation thermique en véhicule routier à motorisation électrique, ledit véhicule routier à motorisation thermique comprenant au moins un moteur thermique, un organe d'émission d'un signal électrique d'accélérateur présentant une valeur qui varie en fonction de la position d'un accélérateur mobile actionnable par l'utilisateur pour faire accélérer ledit véhicule, et un dispositif d'antiblocage de sécurité activable et désactivable, ledit procédé étant caractérisé en ce qu'il comprend les étapes suivantes :
- ledit moteur thermique est retiré du véhicule routier à motorisation thermique,
- un système de freinage régénératif activable et désactivable est installé dans le véhicule routier dépourvu du moteur thermique,
- des moyens électroniques de commande sont installés dans le véhicule routier et connectés au moins audit organe d'émission du signal électrique d'accélérateur pour que ce dernier leur soit transmis, lesdits moyens électroniques de commande étant conçus pour commander l'activation ou la désactivation dudit système de freinage régénératif en fonction de ladite valeur dudit signal électrique d'accélérateur,
- des moyens de détection sont reliés audit dispositif d'antiblocage de sécurité afin de détecter l'activation de ce dernier,
- des moyens électroniques de contrôle sont reliés auxdits moyens de détection pour transmettre auxdits moyens électroniques de commande, en réponse à ladite détection de l'activation du dispositif d'antiblocage de sécurité, un signal électrique de coupure présentant une valeur prédéterminée à la place dudit signal électrique d'accélérateur présentant une valeur variable, ladite valeur prédéterminée étant établie pour que lesdits moyens électroniques de commande auxquels le signal électrique de coupure est transmis désactivent en réponse ledit système de freinage régénératif, indépendamment de la position dudit accélérateur.

D'autres particularités et avantages de l'invention apparaîtront et ressortiront plus en détails à la lecture de la description faite ci-après, en référence aux dessins annexés, donnés uniquement à titre d'exemple illustratif et non limitatif, parmi lesquels :
La figure 1 est un diagramme qui schématise le principe de fonctionnement d'un kit de conversion conforme à un premier mode de réalisation de l'invention, et son interaction avec d'autres éléments du véhicule routier à motorisation thermique à transformer.
La figure 2 est un diagramme qui schématise le principe de fonctionnement d'un kit de conversion conforme à un deuxième mode de réalisation de l'invention, et son interaction avec d'autres éléments du véhicule routier à motorisation thermique à transformer.
La figure 3 est un graphe illustrant schématiquement l'évolution du couple en sortie d'une machine électrique, qui fait partie du kit de conversion selon l'invention et est destinée à remplacer le moteur thermique du véhicule routier à transformer, en fonction de la position de l'accélérateur dudit véhicule.
La figure 4 est un schéma d'un circuit électronique inclus dans, ou contribuant à former au moins, les moyens électroniques de contrôle d'un kit de conversion selon l'invention, conforme par exemple au premier mode de réalisation de la figure 1.
La figure 5 reprend le schéma de la figure 4 et inclut en outre des flèches illustrant la circulation du signal électrique d'accélérateur lorsque le dispositif d'antiblocage de sécurité est désactivé.
La figure 6 reprend le schéma de la figure 4 et inclut en outre des flèches qui illustrent la circulation du signal électrique de coupure lorsque le dispositif d'antiblocage de sécurité est activé.

Selon un premier aspect, l'invention concerne un kit de conversion pour transformer un véhicule routier à motorisation thermique en véhicule routier à motorisation électrique.

Le véhicule routier à motorisation thermique destiné à être transformé au moyen du kit de conversion est un véhicule, par exemple automobile, et de préférence un véhicule roulant pourvu d'une ou plusieurs roues et destiné à circuler sur une voie qui est de préférence carrossable. Ledit véhicule routier à motorisation thermique inclut un moteur à combustion, de préférence à combustion interne, destiné à être alimenté par un carburant qui subit une combustion au sein dudit moteur. Le carburant en question peut être par exemple à base d'hydrocarbures (comme l'essence ou le diesel). Le véhicule routier à motorisation thermique est par exemple une voiture de tourisme, une voiture particulière, un véhicule utilitaire (dépanneuse, fourgon, fourgonnette, camionnette...), un poids-lourd (camion tracteur ou porteur...), ou encore un bus ou un car.

Le véhicule routier à motorisation thermique qu'il s'agit de convertir en véhicule à motorisation électrique comprend un accélérateur mobile actionnable par l'utilisateur pour faire accélérer ledit véhicule. Ledit accélérateur mobile se présente par exemple sous la forme d'une pédale que l'utilisateur peut actionner avec le pied, en pressant plus ou moins sur la pédale pour la faire changer de position et ainsi commander la vitesse de déplacement du véhicule. De préférence, ledit accélérateur mobile est donc formé par une pédale d'accélérateur disposée dans l'habitacle du véhicule, au niveau du poste de conduite. Le véhicule routier à motorisation thermique en question comprend également au moins un organe 1 d'émission d'un signal électrique d'accélérateur 10. Ledit signal électrique d'accélérateur 10 présente une valeur qui varie en fonction de la position dudit accélérateur mobile actionnable par l'utilisateur. L'organe 1 d'émission dudit signal électrique d'accélérateur comprend par exemple un capteur de position dudit accélérateur, relié audit accélérateur pour générer un signal (qui correspond audit signal électrique d'accélérateur 10) représentatif de la position dudit accélérateur. Avantageusement, ledit signal électrique d'accélérateur 10 est une tension électrique, par exemple une tension continue, dont la valeur varie en fonction de la position dudit accélérateur mobile, position qui dépend elle-même par exemple de la pression exercée par le pied de l'utilisateur sur l'accélérateur. Le signal électrique d'accélérateur 10 est destiné à être transmis à un calculateur qui équipe avantageusement ledit véhicule routier à motorisation thermique, lequel utilise le signal électrique d'accélérateur 10 comme donnée d'entrée pour adapter en conséquence la puissance du moteur thermique équipant le véhicule routier, et partant la vitesse de déplacement de ce dernier.

Dans le cas où ledit véhicule routier à motorisation thermique n'est pas doté d'origine d'un organe d'émission d'un signal électrique d'accélérateur (par exemple dans le cas d'un véhicule thermique dont la pédale d'accélérateur d'origine est purement mécanique, sans capteur électronique de position), il conviendra, préalablement à l'utilisation du kit de conversion selon l'invention, de pourvoir le véhicule d'un tel organe d'émission d'un signal électrique d'accélérateur, par exemple en remplaçant la pédale mécanique d'accélérateur par une pédale électrique d'accélérateur. Cette opération de remplacement préalable permet ainsi d'obtenir un véhicule thermique équipé d'un organe 1 d'émission d'un signal électrique d'accélérateur 10, qui pourra ensuite être transformé au moyen du kit de conversion selon l'invention.

Avantageusement, le véhicule routier à motorisation thermique qu'il s'agit de transformer en véhicule électrique comprend également un dispositif de freinage, avantageusement conçu pour assurer un freinage par friction. A cette fin, le dispositif de freinage inclut par exemple :
- des disques de freinage montés sur une ou plusieurs roues du véhicule (par exemple au moins deux roues avant) ;
- un étrier qui coiffe localement le disque de freinage ;
- des plaquettes de freinage, dont l'une au moins est montée mobile relativement à l'étrier qui la porte, le déplacement relatif de la plaquette et de l'étrier étant préférentiellement commandé par un actionneur porté par l'étrier, par exemple un piston relié à un circuit hydraulique de freinage.

Le véhicule thermique à convertir en véhicule électrique comprend également avantageusement un organe de commande de freinage du véhicule actionnable par un utilisateur. L'organe de commande de freinage permet par exemple d'agir sur le circuit hydraulique de freinage pour que les pistons repoussent les plaquettes de frein contre les disques en réponse à un actionnement de l'organe de commande de freinage par l'utilisateur. L'organe de commande de freinage en question présente avantageusement un caractère mobile, et inclut de préférence une pédale de freinage, destinée à être actionnée au pied par l'utilisateur, et qui est par exemple positionnée au sein de l'habitacle du véhicule, par exemple à proximité de la pédale d'accélérateur.

Bien entendu, l'invention n'est aucunement limitée à un dispositif de freinage à disques, et il est par exemple tout à fait envisageable, selon un mode de réalisation alternatif, que le dispositif de freinage inclut un système à tambour.

Le véhicule routier à motorisation thermique à convertir comprend par ailleurs un dispositif d'antiblocage de sécurité 2, qui est un système d'assistance au freinage bien connu en tant que tel, habituellement désigné dans le domaine par le sigle ABS, et qui permet de limiter le risque de perte de contrôle du véhicule par blocage des roues dans les situations de freinage intense. Le dispositif d'antiblocage de sécurité 2 est activable et désactivable, en fonction des conditions de freinage. De préférence, le véhicule routier à motorisation thermique comprend, avantageusement au niveau de chaque roue, un capteur de vitesse de roue qui permet de détecter un éventuel blocage de la route concernée. Les capteurs de vitesse de roue en question sont avantageusement reliés au dispositif d'antiblocage de sécurité 2 pour l'activer si un tel blocage de roue est détecté, ce qui peut être le cas lors d'un freinage d'urgence. L'activation du dispositif d'antiblocage de sécurité 2 correspond ainsi à l'entrée en action de ce dernier pour réguler le freinage afin d'empêcher un blocage des roues. Le dispositif d'antiblocage de sécurité 2 agit alors sur le circuit hydraulique de freinage pour réguler la pression au sein de ce dernier, par exemple en pompant le liquide de frein de façon à faire baisser la pression jusqu'à obtenir un déblocage de la roue. Une fois que la roue ainsi débloquée retrouve de l'adhérence, le dispositif d'antiblocage de sécurité 2 commande cette fois une augmentation de pression. En d'autres termes, ledit dispositif d'antiblocage de sécurité 2 est avantageusement pourvu de moyens de régulation hydrauliques pour réguler la pression de freinage autour du point de blocage de la roue. Afin de mettre en oeuvre cette fonction de régulation hydraulique de la pression de freinage, le dispositif d'antiblocage de sécurité 2 qui équipe le véhicule routier à motorisation thermique comprend différents composants, dont certains au moins sont alimentés électriquement, et en particulier des composants hydrauliques comme par exemple :
- des électrovannes, et par exemple des électrovannes de maintien de pression (normalement ouvertes) et/ou des électrovannes de diminution de pression (normalement fermées) ;
- une pompe de recirculation...

Lors de l'activation du dispositif d'antiblocage de sécurité 2, l'électrovanne de maintien de pression normalement ouverte pour la roue concernée se ferme afin d'empêcher qu'une pression additionnelle ne soit appliquée sur le disque associé à la roue en question. S'ensuivent différentes étapes impliquant les autres composants (électrovanne de diminution de pression, pompe...), sous le contrôle d'un module électronique, pour réguler automatiquement la pression de freinage et maintenir la directivité du véhicule.

Un tel dispositif d'antiblocage de sécurité 2 activable/désactivable est bien connu en tant que tel, et ne nécessite donc pas d'être décrit plus avant ici.

De préférence, le véhicule routier à motorisation thermique à convertir en véhicule routier à motorisation électrique comprend un bus CAN, c'est-à-dire un bus de communication fonctionnant selon le protocole CAN (Control Area Network). Avantageusement, ledit dispositif d'antiblocage de sécurité 2 est connecté audit bus CAN du véhicule routier à motorisation thermique. De préférence, des trames de données en provenance du dispositif d'antiblocage de sécurité 2 (ou d'un ou plusieurs de ses composants) circulent au sein du bus CAN 8, et en particulier des trames de données qui reflètent, directement ou indirectement, l'état activé ou désactivé dudit dispositif d'antiblocage sécurité 2. À cette fin, le dispositif d'antiblocage de sécurité 2 comprend avantageusement des moyens électroniques reliés aux différents composants actifs (électrovannes, pompe...) du dispositif d'antiblocage de sécurité 2. Par exemple, lesdits moyens électroniques du dispositif d'antiblocage de sécurité 2 peuvent être conçus pour émettre automatiquement des trames de données qui reflètent un changement d'état des composants du dispositif d'antiblocage de sécurité 2, par exemple un changement d'état de chacune des électrovannes et/ou de la pompe.

Conformément à l'invention, le kit de conversion comprend au moins un système de freinage régénératif activable et désactivable. Un tel système de freinage génératif est connu en tant que tel. Il permet de transformer l'énergie cinétique du véhicule lors des phases de décélération et de freinage en énergie électrique transmise à la batterie pour y être stockée, et ainsi améliorer l'autonomie du véhicule. Le système de freinage régénératif est donc conçu pour être activé uniquement lors des phases de décélération ou de freinage, et au contraire pour être désactivé en dehors de ces phases de décélération et de freinage, lorsque le véhicule se déplace à vitesse constante, ou accélère.

Avantageusement, le kit de conversion inclut une batterie, qui comprend par exemple un ou plusieurs éléments capables de fournir du courant électrique, par exemple par transformation d'énergie produite par une réaction chimique en énergie électrique. Ladite batterie est destinée à être montée au sein du véhicule routier à motorisation thermique à transformer, par exemple dans le compartiment moteur et/ou à la place du réservoir à carburant dudit véhicule à motorisation thermique, qui doit donc être démonté préalablement.

Le kit de conversion comprend également avantageusement une machine électrique 3 permettant la conversion d'énergie électrique en énergie mécanique et inversement. De préférence, ladite machine électrique 3 est une machine tournante incluant un stator et un rotor. Elle forme avantageusement un convertisseur électromécanique dont le fonctionnement est fondé sur les principes de l'électromagnétisme. De préférence, ladite machine électrique 3 est une machine électrique à courant continu ou à courant alternatif, asynchrone ou synchrone. Ladite machine électrique 3 est destinée à être reliée électriquement à ladite batterie. À cette fin, le kit de conversion inclut des moyens de connexion électrique, qui se présentent par exemple sous la forme de câbles électriques munis de connecteurs pour assurer la liaison électrique entre la machine électrique 3 et la batterie. La machine électrique 3 est destinée à être installée au sein du véhicule routier à motorisation thermique, pour le transformer en véhicule électrique. Pour cela, la machine électrique 3 est avantageusement conçue pour être installée à la place du moteur thermique équipant initialement le véhicule routier à motorisation thermique, de sorte qu'un démontage préalable dudit moteur thermique est avantageusement requis pour installer le kit. Le kit de conversion comprend avantageusement des moyens de fixation du stator au châssis du véhicule à motorisation thermique à convertir, ainsi que des moyens de connexion mécanique permettant de relier mécaniquement le rotor à la chaîne de transmission de puissance dont est déjà équipé le véhicule thermique à transformer, pour que le rotor puisse entraîner les roues en rotation et inversement.

Avantageusement, la machine électrique 3 est conçue pour se trouver alternativement, sous l'influence d'un contrôleur électronique 4, soit dans une configuration motrice dans laquelle la machine électrique 3 est alimentée électriquement par la batterie pour assurer la propulsion du véhicule équipé par le kit (génération d'un couple moteur), soit dans une configuration génératrice dans laquelle la machine électrique 3 alimente électriquement la batterie pour la recharger, tout en faisant ralentir le véhicule équipé du kit (génération d'un couple de freinage), soit dans une configuration de roue libre dans laquelle la machine électrique 3 est déconnectée électriquement de la batterie (pas de couple généré ni reçu par la machine électrique 3). Le contrôleur électronique 4 fait avantageusement partie du kit de conversion, et il est relié à la machine électrique 3 pour en commander le fonctionnement, et notamment pour la faire passer de l'une à l'autre de ses configurations motrice, génératrice et de roue libre, de façon automatique, en réponse à différents signaux reflétant les conditions de fonctionnement du véhicule et les instructions de commande de l'utilisateur. Par exemple, ledit contrôleur 4 inclut un onduleur, de préférence à fréquence variable. Dans la configuration motrice, le rotor transmet de la puissance motrice aux roues du véhicule, ce qui permet à ce dernier d'avancer, le niveau de puissance communiqué aux roues étant contrôlé par l'utilisateur au moyen de l'accélérateur mobile évoqué précédemment. Inversement, dans la configuration génératrice, ce sont les roues qui entraînent en rotation le rotor de la machine électrique 3, de façon à générer un courant électrique qui est transmis à la batterie pour la recharger. Ainsi, dans la configuration génératrice, la machine électrique 3 forme avantageusement un alternateur. En configuration de roue libre, le stator n'est plus relié électriquement à la batterie, de sorte qu'aucun effort de propulsion ou de freinage n'est généré, et la batterie ne se recharge pas.

Avantageusement, lesdits machine électrique 3 et contrôleur électronique 4 contribuent à former ledit système de freinage régénératif, le contrôleur électronique 4 étant conçu pour commander le maintien de la machine électrique 3 en configuration génératrice tant que le système de freinage régénératif est activé. En d'autres termes, l'activation du système de freinage régénératif correspond au passage de la machine électrique 3 de sa configuration motrice (ou de roue libre) à sa configuration génératrice, dans laquelle les roues du véhicule entraînent en rotation le rotor pour générer un courant électrique qui vient alimenter la batterie, le rotor impartissant en réaction aux roues auxquelles il est relié un couple de freinage. Le système de freinage régénératif inclut donc avantageusement la machine électrique 3 en configuration génératrice.

Le kit de conversion comprend également des moyens électroniques de commande auxquels est transmis ledit signal électrique d'accélérateur 10 pour que lesdits moyens électroniques de commande commandent l'activation ou la désactivation dudit système de freinage régénératif en fonction de ladite valeur dudit signal électrique d'accélérateur 10. De préférence, le contrôleur 4 fait partie desdits, ou forme lesdits, moyens électroniques de commande. Une partie ou la totalité desdits moyens électroniques de commande fait par exemple partie d'une unité de commande électronique 5, laquelle inclut au moins un calculateur électronique et un logiciel embarqué.

De préférence, ledit kit de conversion comprend ladite unité de commande électronique 5 qui forme tout ou partie desdits moyens électroniques de commande. Les moyens électroniques de commande sont ainsi reliés à l'organe 1 d'émission du signal électrique d'accélérateur 10, pour accéder à ce dernier et en retour activer ou désactiver le système de freinage régénératif selon la valeur instantanée du signal électrique d'accélérateur 10. En d'autres termes, les moyens électroniques de commande accèdent avantageusement de façon permanente et en temps réel au signal électrique d'accélérateur 10, ce qui leur permet d'activer ou de désactiver en temps réel le système de freinage régénératif pour tenir compte de la position instantanée dudit accélérateur mobile. Afin d'assurer la récupération, par les moyens électroniques de commande, dudit signal électrique d'accélérateur 10, le kit de conversion comprend avantageusement des moyens de connexion permettant d'assurer une liaison électrique entre l'organe 1 d'émission qui fait partie du véhicule thermique à convertir et lesdits moyens électroniques de commande qui font eux partie du kit à installer sur le véhicule thermique pour le transformer en véhicule électrique. De préférence, lorsque la valeur du signal électrique d'accélérateur 10 correspond à une séquence de ralentissement ou de freinage du véhicule équipé du kit de conversion, lesdits moyens électroniques de commande transmettent au contrôleur électronique 4 un signal de commande pour que ledit contrôleur électronique 4 fasse en réponse passer la machine électrique 3 dans sa configuration génératrice. Inversement, lorsque l'accélérateur est actionné par l'utilisateur pour faire accélérer le véhicule, la valeur dudit signal électrique d'accélérateur 10 transmis aux moyens électroniques de commande entraîne l'émission, par ces derniers, d'un signal de commande au contrôleur électronique 4 qui en réponse fait cette fois passer la machine électrique 3 en configuration motrice.

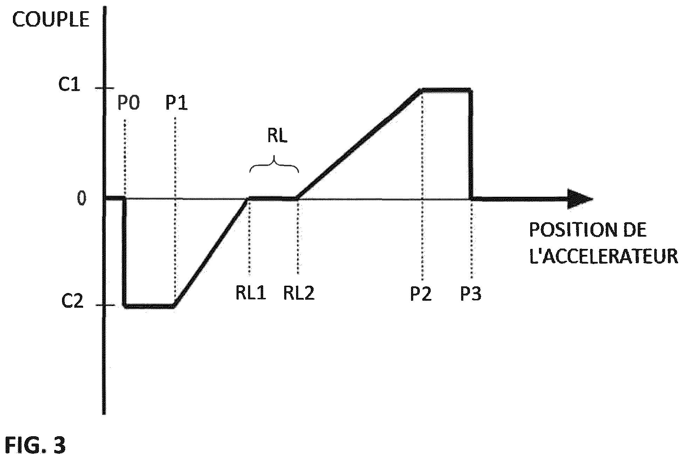

De préférence, les moyens électroniques de commande et/ou l'unité de commande électronique 5 dont ils font partie sont conçus pour que le couple généré ou reçu par la machine électrique 3 dépende de la position de l'accélérateur contrôlé par l'utilisateur selon une loi de commande qui correspond à celle illustrée par la figure 3. Cette loi de commande concerne avantageusement un accélérateur mobile formé de préférence par une pédale rappelée élastiquement dans une position déployée, et que l'utilisateur peut enfoncer progressivement en appuyant dessus avec son pied jusqu'à une position finale de butée correspondant à une commande d'accélération maximale. Plus précisément, la loi de commande illustrée par la figure 3 se décompose comme suit :
- En l'absence de pression sur la pédale d'accélérateur, celle-ci occupe une position P0 correspondant à la position extrêmale déployée de la pédale. Le signal électrique d'accélérateur 10 présente alors une valeur qui conduit les moyens électroniques de commande à activer, par l'intermédiaire du contrôleur électronique 4, le système de freinage régénératif, correspondant à la configuration génératrice de la machine électrique 3. Cette dernière oppose alors un couple maximal C2 à la rotation des roues, qui contribue à freiner le véhicule.
- L'enfoncement de la pédale jusqu'à la position P1 (pédale très légèrement enfoncée) maintient l'activation du système de freinage génératif avec le couple de freinage maximal C2. Si la pédale est encore enfoncée un peu plus par l'utilisateur, le couple de freinage appliqué par la machine électrique 3 en configuration de générateur va progressivement diminuer jusqu'à atteindre une valeur nulle lorsque la pédale est légèrement enfoncée dans une position de début de roue libre RL1. La première position de roue libre RL1 de la pédale correspond à une configuration de roue libre, dans laquelle aucun couple (moteur ou de freinage) n'est appliqué sur les roues, qui se retrouvent alors en rotation libre. Cette rotation libre est maintenue sur une portion de course RL réduite de la pédale, jusqu'à une position de fin de roue libre RL2.
- La poursuite de l'enfoncement de la pédale au-delà de la position de fin de roue libre RL2 entraîne l'émission d'un signal électrique d'accélérateur 10 dont la valeur provoque la désactivation, par les moyens électroniques de commande, via le contrôleur électronique 4, du système de freinage régénératif. Cela signifie que la machine électrique 3 passe alors de sa configuration génératrice à sa configuration motrice. La machine électrique 3 se transforme ainsi en moteur qui actionne les roues en rotation.
- La poursuite de l'enfoncement de la pédale conduit alors la machine électrique 2 à impartir aux roues du véhicule un couple moteur croissant, qui atteint une valeur maximale C1 lorsque la pédale est presque complètement enfoncée et se trouve dans une position d'accélération maximale P2. La poursuite de l'enfoncement de la pédale jusqu'à la position terminale de butée P3 maintient le couple moteur à la valeur maximale C1.

Conformément à l'invention, le kit de conversion comprend des moyens de détection 6 conçus pour être reliés au dispositif d'antiblocage de sécurité 2 afin de détecter l'activation de ce dernier. Les moyens de détection 6 sont en d'autres termes conçus pour coopérer avec le dispositif d'antiblocage de sécurité 2, afin de pouvoir émettre un signal représentatif de l'état d'activation ou de désactivation de ce dernier.

Comme exposé précédemment, le dispositif d'antiblocage de sécurité 2 qui équipe le véhicule thermique à transformer comprend de préférence au moins un composant (par exemple une électrovanne ou une pompe) conçu pour évoluer entre au moins un premier et un deuxième état de fonctionnement, ledit premier état de fonctionnement étant atteint en réponse à l'activation dudit dispositif d'antiblocage de sécurité 2. De préférence, ledit composant est alimenté électriquement par une ligne d'alimentation 7 au sein de laquelle circule un courant électrique que le passage du deuxième état de fonctionnement au premier état de fonctionnement fait varier. De préférence, ledit composant comprend une électrovanne, par exemple une électrovanne de maintien de pression normalement ouverte, qui évolue entre un premier état de fonctionnement (électrovanne fermée) et un deuxième état de fonctionnement (électrovanne ouverte). Lorsque le dispositif d'antiblocage de sécurité 2 est activé, ladite électrovanne, qui se trouve initialement en configuration normalement ouverte, passe en configuration fermée. Ce passage en configuration fermée occasionne un appel de courant électrique dans la ligne d'alimentation 7, qui est concomitant au déclenchement (c'est-à-dire à l'activation) du dispositif d'antiblocage de sécurité 2. Alternativement, le composant en question peut comprendre un autre composant électrique du dispositif d'antiblocage de sécurité 2, sans pour autant que l'on sorte du cadre de l'invention.

Avantageusement, les moyens de détection 6 comprennent un capteur de courant conçu pour mesurer le courant électrique circulant au sein de la ligne d'alimentation 7, pour détecter ainsi le passage dudit deuxième état de fonctionnement du composant (qui est par exemple une électrovanne) audit premier état de fonctionnement. Un tel capteur de courant permet de mesurer l'intensité du courant circulant au sein de la ligne d'alimentation du composant du dispositif d'antiblocage de sécurité 2, et détecter ainsi, lors de l'activation du dispositif d'antiblocage de sécurité 2, une variation de l'intensité du courant électrique qui signe le déclenchement du dispositif d'antiblocage de sécurité 2.

Dans ce mode de réalisation préférentiel, le kit de conversion permet d'accéder de façon extrêmement simple, rapide et bon marché à un signal représentatif du déclenchement (activation) du dispositif d'antiblocage de sécurité 2, sans qu'il ne soit nécessaire de démonter ou d'analyser d'une quelconque façon le dispositif d'antiblocage de sécurité 2 déjà présent sur le véhicule routier à motorisation thermique, ni qu'il ne soit nécessaire d'intervenir sur le circuit électrique de freinage ou sur le circuit hydraulique de freinage. Il suffit en effet, dans ce mode de réalisation préférentiel, de procéder à une simple mesure de courant pour en déduire l'activation du dispositif d'antiblocage de sécurité 2. Le principe de fonctionnement de ce mode de réalisation est donc particulièrement simple, robuste et bon marché. Une telle solution présente aussi l'intérêt d'être à caractère universel : il suffit en effet d'accéder à la ligne d'alimentation électrique 7 d'un composant du dispositif d'antiblocage de sécurité 2 pour bénéficier d'un signal fiable, quel que soit le véhicule concerné. Le kit de conversion présente ainsi un caractère universel qui lui permet de s'adapter à n'importe quel véhicule.

De préférence, ledit capteur de courant est un capteur en boucle ouverte à effet Hall. Le recours à un capteur de courant en boucle ouverte à effet Hall s'avère particulièrement avantageux car un tel capteur peut être aisément associé à la ligne d'alimentation 7 pour mesurer le courant électrique qui passe au sein de cette dernière. Un tel capteur présente en effet un corps annulaire qu'il suffit de positionner autour de la ligne d'alimentation 7, sans nécessité d'un contact avec cette dernière, pour obtenir une mesure suffisamment fiable permettant de détecter le déclenchement du dispositif d'antiblocage de sécurité 2. Par exemple, le capteur de courant est un capteur commercialisé sous la référence DHAB S/124 par la société LEM International SA, route du Nant d'Avril 152 CH 1217 Meyrin, Suisse.

Bien entendu, l'invention n'est pas limitée à un capteur de courant particulier, et il est par exemple envisageable, selon un mode de réalisation alternatif, de recourir à un capteur de courant monté électriquement en série, au lieu du capteur en boucle ouverte à effet Hall susvisé.

Avantageusement, en plus du capteur de courant, ou à la place de ce dernier, les moyens de détection 6 comprennent des moyens électroniques de traitement, qui font par exemple partie de l'unité de commande électronique 5, et sont conçus pour analyser des trames de données transitant au sein du bus CAN 8 auquel est connecté ledit dispositif d'antiblocage de sécurité 2. Dans ce cas, les moyens électroniques de traitement qui font partie des moyens de détections 6 identifient, à partir des trames de données analysées qui transitent au sein du bus CAN 8, l'activation du dispositif d'antiblocage de sécurité 2 au moment où celle-ci se produit. Afin de permettre cette analyse des trames de données en provenance du dispositif d'antiblocage de sécurité 2, l'unité de commande électronique 5, qui inclut avantageusement lesdits moyens électroniques de traitement, est destinée à être reliée au bus CAN 8 déjà présent et connecté au dispositif d'antiblocage de sécurité 2 dans le véhicule thermique à transformer. Cela signifie que le kit de conversion comprend avantageusement des moyens de connexion permettant d'établir une liaison fonctionnelle, au moyen par exemple de connecteurs et de câbles électriques, entre l'unité de commande électronique 5 qui fait partie du kit de conversion et le bus CAN 8 qui préexiste au sein du véhicule routier à motorisation thermique. Dans ce mode de réalisation alternative, il est ainsi tiré parti de la présence d'un bus CAN déjà installé dans le véhicule thermique, avant conversion, ce qui peut éventuellement permettre d'éviter de recourir à un capteur de courant. En revanche, en l'absence de bus CAN, le capteur de courant s'avère être une solution universelle extrêmement simple, robuste et fiable. Il est également possible que les moyens de détections 6 comprennent à la fois un capteur de courant et des moyens électroniques de traitement conçu pour analyser des trames de données transitant sein du bus CAN 8 auquel est connecté le dispositif d'antiblocage sécurité 2, ce qui permet d'obtenir un niveau de sécurité accru, par la redondance ainsi mise en oeuvre.

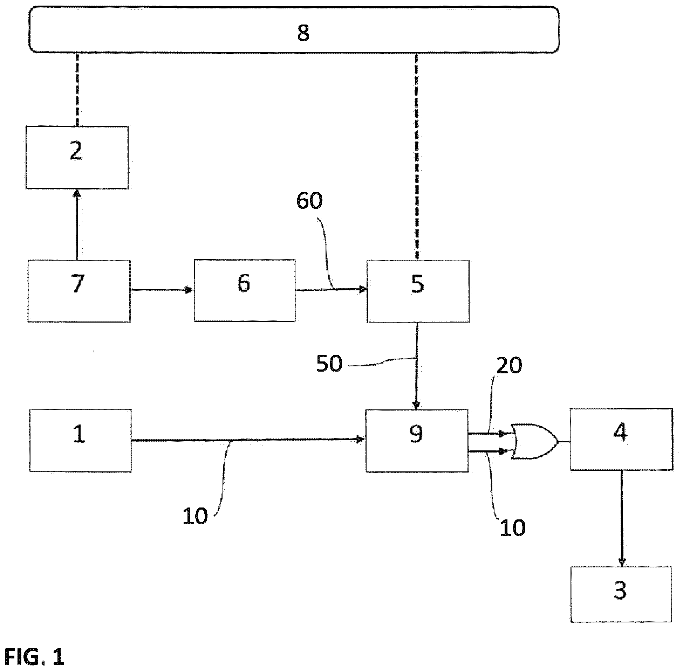

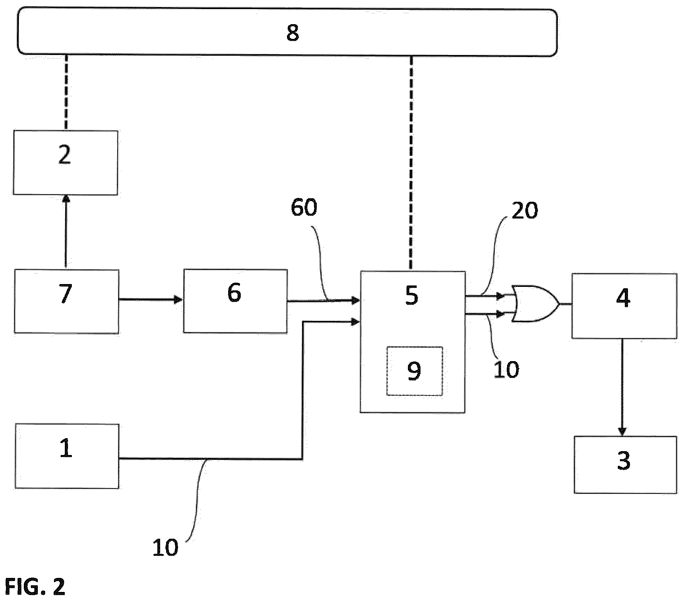

Conformément à l'invention, le kit de conversion comprend des moyens électroniques de contrôle 9 reliés audit moyen de détection 6 pour transmettre auxdits moyens électroniques de commande, en réponse à la détection de l'activation du dispositif d'antiblocage de sécurité 2, un signal électrique de coupure 20 à la place dudit signal électrique d'accélérateur 10. Dans le mode de réalisation de la figure 1, lesdits moyens électroniques de contrôle 9 sont de préférence embarqués, en tout ou partie, dans un module distinct de l'unité de commande électronique 5, à laquelle ledit module est avantageusement relié, comme illustré par la figure 1. Il est cependant parfaitement envisageable que lesdits moyens électroniques de contrôle 9 soient intégrés, en tout ou partie, dans l'unité de commande électronique 5 (mode de réalisation de la figure 2), sans pour autant que l'on sorte du cadre de l'invention.

Le signal électrique de coupure 20 présente une valeur prédéterminée, au contraire du signal électrique d'accélérateur 10 qui lui présente une valeur variable dépendante de la position de l'accélérateur mobile. Ladite valeur prédéterminée du signal de coupure 20 correspond par exemple à une valeur prédéterminée de tension électrique, qui est par exemple préréglée au moyen d'une résistance de réglage 11. Ainsi, les moyens de détection 6 communiquent avantageusement au moyen électronique de commande, et par exemple à l'unité de commande électronique 5, un signal de détection 60 présentant une valeur qui varie pour refléter l'activation ou la désactivation du dispositif d'antiblocage de sécurité 2. Lorsque la valeur dudit signal de détection 60 correspond à l'activation du dispositif d'antiblocage de sécurité 2, les moyens électroniques de contrôle 9 transmettent en réponse auxdits moyens électroniques de commande, dont fait avantageusement partie au moins le contrôleur 4, ledit signal électrique de coupure 20.

Ladite valeur prédéterminée du signal électrique de coupure 20 est établie pour que les moyens électroniques de commande, dont fait avantageusement partie le contrôleur 4, auxquels le signal électrique de coupure 20 est transmis, désactivent en réponse audit signal électrique de coupure 20 le système de freinage régénératif, indépendamment de la position de l'accélérateur.

En d'autres termes, le kit de conversion selon l'invention est conçu pour détecter l'activation du dispositif d'antiblocage de sécurité 2 et désactiver en réponse le système de freinage régénératif, indépendamment de la position de l'accélérateur, par l'émission du signal électrique de coupure 20, dont la valeur est avantageusement fixe et choisie pour commander la désactivation, par les moyens électroniques de commande, du système de freinage régénératif.

L'invention repose ainsi sur un principe technique extrêmement simple et fiable, selon lequel le kit de conversion est capable, de manière autonome, de détecter l'activation du dispositif d'antiblocage de sécurité 2 préalablement présent sur le véhicule thermique à transformer, et de commander immédiatement en réponse la désactivation du système de freinage régénératif, pour éviter tout risque de voir survenir, pendant un freinage d'urgence, un couple de freinage appliqué aux roues motrices qui pourrait perturber le conducteur si le dispositif d'antiblocage de sécurité 2 est activé. Lorsqu'au contraire le dispositif d'antiblocage de sécurité 2 n'est pas activé, le kit de conversion permet d'activer et désactiver le système de freinage régénératif en fonction de la position effective de l'accélérateur, elle-même contrôlée par l'utilisateur. La conception du kit de conversion selon l'invention évite ainsi toute analyse des conditions de déclenchement du dispositif d'antiblocage de sécurité 2 préexistant sur le véhicule thermique à convertir, grâce à la simple détection du déclenchement (activation) du dispositif d'antiblocage de sécurité 2, sans qu'il ne soit nécessaire de remonter aux conditions de déclenchement, et par exemple aux données issues des capteurs de vitesse embarqués au niveau des roues. L'invention permet également d'éviter toute intervention directe sur les circuits hydrauliques et électriques de freinage dont le véhicule thermique est déjà équipé avant sa transformation en véhicule électrique.

Cela contribue à simplifier et fiabiliser de façon significative l'opération de conversion. Cette simplification est amplifiée par le fait que, lorsque le kit de conversion détecte l'activation du dispositif d'antiblocage de sécurité 2, il force en retour la désactivation du système de freinage régénératif, pour éviter tout risque de perturbation du conducteur en cas de freinage d'urgence. Ceci évite là encore tout travail d'intégration spécifique autorisant le déclenchement concomitant du dispositif d'antiblocage de sécurité 2 et du système de freinage régénératif.

Grâce à cette double simplification, le kit de conversion présente un caractère universel, qui permet son adaptation immédiate quel que soit le véhicule concerné, en préservant un comportement parfaitement sûr et fiable du véhicule en toutes circonstances.

Avantageusement, lesdits moyens électroniques de commande sont conçus pour désactiver le système de freinage régénératif en réponse à l'atteinte, par ladite valeur du signal électrique d'accélérateur 10, d'une valeur seuil correspondant à l'occupation, par ledit accélérateur mobile, sous l'effet d'un actionnement prédéterminé de l'utilisateur, d'une position neutre associée à un déplacement en roue libre du véhicule, ladite valeur prédéterminée du signal électrique de coupure 20 étant dans ce cas avantageusement égale à ladite valeur seuil. Par exemple, dans le mode de réalisation correspondant à la figure 3, ladite position neutre de l'accélérateur fait partie de la plage de roue libre RL, c'est-à-dire que ladite position neutre est soit la position de début de roue libre RL1, soit la position de fin de roue libre RL2, soit l'une quelconque des positions situées entre lesdites positions RL1 et RL2. Lorsque l'accélérateur se trouve dans une telle position neutre de roue libre, l'organe 1 émet un signal électrique d'accélérateur 10 dont la valeur entraîne la désactivation du système de freinage régénératif par les moyens électroniques de commande. Dans ce cas, la valeur prédéterminée du signal électrique de coupure 20 est réglée pour être avantageusement égale à ladite valeur seuil précitée, de sorte que le signal électrique de coupure 20, qui remplace le signal électrique d'accélérateur 10, est perçu par les moyens électroniques de commande comme un signal électrique d'accélérateur 10 reflétant une position de l'accélérateur mobile appartenant à la plage de roue libre RL. En d'autres termes, les moyens électroniques de contrôle 9 sont avantageusement conçus dans ce cas pour communiquer au moyen électronique de commande un signal qui simule une position de roue libre de l'accélérateur, indépendamment de la position réelle de ce dernier. Par exemple, ladite valeur prédéterminée du signal électrique de coupure 20 est une valeur de tension qui est égale à la valeur de tension renvoyée par l'organe 1 en réponse à un positionnement de l'accélérateur dans la plage de roue libre RL, sous l'effet d'un actionnement dudit accélérateur par l'utilisateur.

De préférence, les moyens électroniques de contrôle 9 incluent un sélecteur relié auxdits moyens de détection 6 pour autoriser les moyens électroniques de commande à accéder, pour commander l'activation ou la désactivation du système de freinage régénératif, soit au signal électrique d'accélérateur 10, soit au signal électrique de coupure 20, selon que le dispositif d'antiblocage de sécurité 2 est désactivé ou activé.

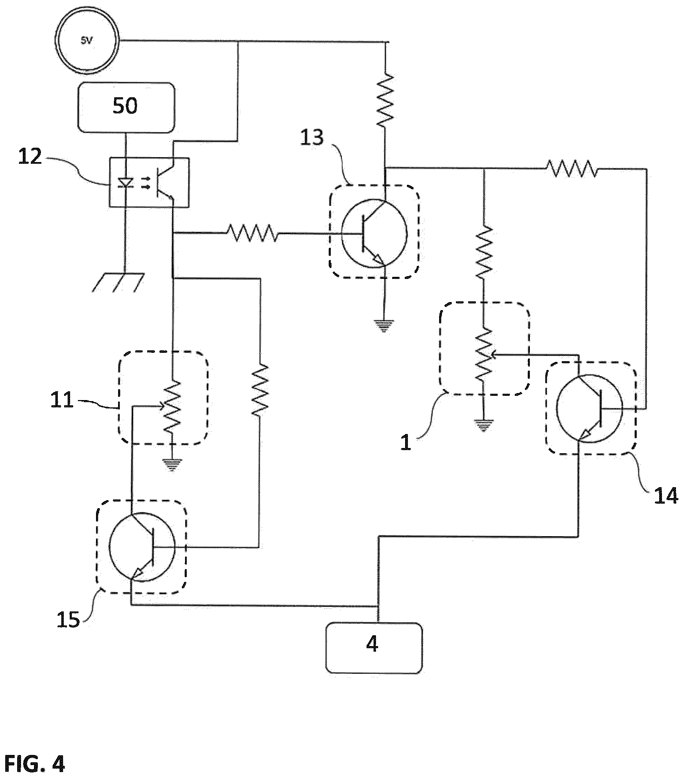

Le sélecteur en question est formé par exemple par un circuit électronique tel que celui qui correspond au schéma des figures 4 à 6.

Le mode de réalisation spécifique correspondant aux figures 4 à 6 permet de tenir compte en particulier des contraintes suivantes :
- la désactivation du système de freinage régénératif ne peut pas être obtenue directement et uniquement par le biais de l'unité de commande électronique 5, mais au moyen du contrôleur 4 qui pilote le fonctionnement de la machine électrique 3 ;
- le signal électrique d'accélérateur 10 est associé à une masse analogique propre au circuit électronique de l'organe 1 d'émission et présente une valeur, correspondant à une tension, comprise entre 0 et 5 V.

Le circuit électronique des figures 4 à 6 permet ainsi de recevoir en entrée un signal de sortie de l'unité de commande électronique 5 qui forme une entrée logique (signal ABS actif 0 ou 1). En fonction de la valeur de cette entrée logique, l'inverseur logique formé par le circuit électronique permet de fournir alternativement au contrôleur 4 le signal électrique de coupure 20 dont la valeur égale la valeur seuil reflétant une position de roue libre, ou le signal électrique d'accélérateur 10 qui reflète la position instantanée effective de l'accélérateur. Le circuit des figures 4 à 6 permet une certaine manière d'émuler une position de pédale d'accélération neutre (relâchement faible) lorsque le dispositif d'antiblocage de sécurité 2 fonctionne (est activé) afin d'empêcher le contrôleur 4 d'activer la régénération de puissance.

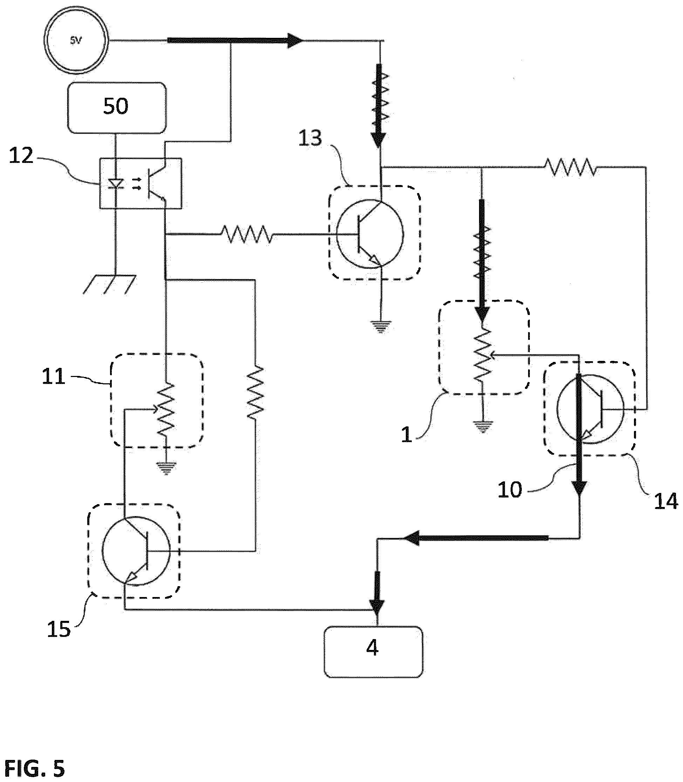

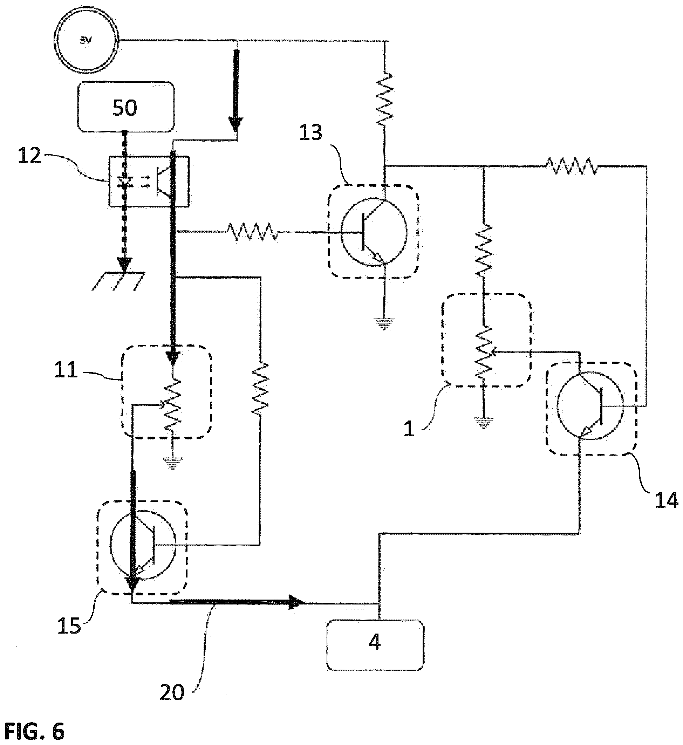

Plus précisément, dans ce mode de réalisation illustré aux figures 4 à 6, l'unité de commande électronique 5 transmet aux moyens électroniques de contrôle 9 un signal de commande 50 dont la valeur varie selon que les moyens de détection 6 détectent ou non une activation du dispositif d'antiblocage de sécurité 2, que ce soit grâce à un capteur de courant et/ou par une analyse des trames de données transitant au sein du bus CAN 8. Dans le cas où le signal 50 reflète l'inactivation du dispositif d'antiblocage de sécurité 2, les moyens électroniques de contrôle 9 communiquent au contrôleur 4 le signal électrique d'accélérateur 10, comme illustré par la figure 5. À l'inverse, lorsque le signal de commande 50 reflète l'activation du dispositif d'antiblocage de sécurité 2, les moyens électroniques de contrôle 9 sont conçus pour communiquer au contrôleur 4 non pas le signal électrique d'accélérateur 10 issu de l'organe 1 d'émission relié à l'accélérateur, mais le signal de coupure 20 de valeur prédéterminée, comme illustré par la figure 6.

Le circuit électronique des figures 4 à 6 confère en outre aux signaux 10, 20 transmis au contrôleur 4 un caractère analogique, qui permet la lecture du signal concerné 10, 20 par le contrôleur 4.

Le circuit des figures 4 à 6, qui contribue avantageusement à former les moyens électroniques de contrôle 9, et en particulier le sélecteur, met en oeuvre avantageusement, comme illustré, un optocoupleur et des transistors pour former en particulier un inverseur logique permettant de fournir alternativement au contrôleur 3 le signal électrique d'accélérateur 10 et le signal électrique de coupure 20 en fonction de la valeur du signal de commande 50 en sortie de l'unité de commande électronique 5. L'optocoupleur est choisi pour permettre la séparation des masses analogiques (et en particulier de la masse analogique du circuit de l'organe 1 d'émission) de la masse véhicule, tandis qu'un premier transistor 13 forme un inverseur logique, et que des deuxième et troisième transistors 14, 15 forment des transistors de verrouillage.

Dans le mode de réalisation particulièrement avantageux mettant en oeuvre des moyens de détection 6 incluant un capteur de courant, ce dernier est sensible au champ magnétique produit par l'appel de courant du dispositif d'antiblocage de sécurité 2 associé par exemple à un changement de configuration d'un composant hydraulique, telle qu'une électrovanne. Le signal 60 issu du capteur de courant est lu par l'élément logiciel approprié de la carte électronique embarquée de l'unité de commande électronique 5, laquelle en retour communique un signal de commande 50 aux moyens électroniques de contrôle 9 afin que ces derniers transmettent au contrôleur 4 soit le signal électrique d'accélérateur 10 réel, soit un signal électrique émulé, qui forme le signal électrique de coupure 20.

Le circuit des figures 4 à 6 permet ainsi d'apporter une solution particulièrement simple, reposant sur un système analogique, permettant une gestion sécuritaire du système de freinage régénératif et du dispositif d'antiblocage de sécurité 2.

Avantageusement, dans les deux cas (signal électrique d'accélérateur 10 transmis au contrôleur 4 ou signal électrique de coupure 20 transmis au contrôleur 4), un retour du couple en temps réel est transmis par le contrôleur 4 à l'unité de commande électronique 5 pour permettre à cette dernière de gérer la sécurité de fonctionnement.

Avantageusement, lesdits moyens électroniques de contrôle 9 sont conçus pour être reliés audit organe de commande de freinage du véhicule actionnable par l'utilisateur évoqué précédemment, de façon à ne transmettre auxdits moyens électroniques de commande ledit signal électrique de coupure 20 à la place dudit signal électrique d'accélérateur 10 que si ledit organe de commande de freinage est actionné par l'utilisateur, c'est-à-dire que si l'utilisateur commande le freinage du véhicule en actionnant ledit organe de commande de freinage. Grâce à cette mesure technique, le kit de conversion présente un caractère particulièrement sûr et fiable, avec un risque limité de fonctionnement défectueux.

Avantageusement, l'unité de commande électronique 5 est conçue pour couper l'alimentation du contrôleur 4 de la machine électrique 3 en cas de défaillance dudit contrôleur 4. Le contrôleur 4 est avantageusement relié au bus CAN 8, de sorte qu'une éventuelle défaillance du contrôleur 4 peut être détectée par l'unité de commande électronique 5 par analyse des trames de données transitant au sein du bus CAN 8.

Selon un deuxième aspect, l'invention concerne également un véhicule routier à motorisation électrique obtenu par transformation d'un véhicule routier à motorisation thermique, au moyen du kit de conversion conforme à l'invention, tel que décrit dans ce qui précède. Dès lors, la description qui précède concernant le kit de conversion s'applique, mutatis mutandis, au véhicule routier selon l'invention. Ledit véhicule routier à motorisation électrique en question comprend au moins un organe 1 d'émission d'un signal électrique d'accélérateur présentant une valeur qui varie en fonction de la position d'un accélérateur mobile actionnable par l'utilisateur pour faire accélérer le véhicule routier à motorisation électrique. Ledit véhicule routier selon l'invention comprend également un dispositif d'antiblocage de sécurité 2 activable et désactivable. Comme évoqué plus haut, le véhicule routier électrique en question est pourvu, conformément à l'invention, d'un kit de conversion conforme à la description qui précède, et dont les moyens de détection sont reliés au dispositif d'antiblocage de sécurité 2 afin de détecter l'activation de ce dernier.

Enfin, selon un troisième aspect, l'invention concerne également un procédé de transformation d'un véhicule routier à motorisation thermique en véhicule routier à motorisation électrique.

De préférence, le procédé de transformation selon l'invention est mis en oeuvre au moyen du kit de conversion selon l'invention, tel que décrit dans ce qui précède. Par conséquent, la description qui précède concernant le kit de conversion s'applique, mutatis mutandis, au procédé de transformation selon l'invention, et réciproquement.

Le véhicule routier à motorisation thermique qui est le point de départ du procédé de conversion comprend au moins un moteur thermique, un organe 1 d'émission d'un signal électrique d'accélérateur présentant une valeur qui varie en fonction de la position d'un accélérateur mobile actionnable par l'utilisateur pour faire accélérer ledit véhicule, et un dispositif d'antiblocage de sécurité 2 activable et désactivable.

Le procédé selon invention comprend les étapes suivantes :
- Le moteur thermique est retiré du véhicule routier à motorisation thermique.
- Un système de freinage régénératif activable et désactivable est installé dans le véhicule routier dépourvu du moteur thermique. Par exemple, une machine électrique 3 est installée à la place du moteur thermique, ladite machine électrique 3 étant conçue pour se trouver alternativement, sous l'influence d'un contrôleur électronique 4, soit dans une configuration motrice, soit dans une configuration génératrice, soit dans une configuration de roue libre, comme exposé précédemment.
- Des moyens électroniques de commande sont installés dans le véhicule routier et connecté au moins audit organe 1 d'émission du signal électrique d'accélérateur 10 pour que ledit signal électrique d'accélérateur 10 soit transmis auxdits moyens électroniques de commande. Les moyens électroniques de commande sont conçus pour commander l'activation ou la désactivation du système de freinage régénératif en fonction de la valeur dudit signal électrique d'accélérateur 10.

- Des moyens de détections 6 sont reliés au dispositif d'antiblocage de sécurité 2 afin de détecter l'activation de ce dernier.
- Des moyens électroniques de contrôle 9 sont reliés auxdits moyens de détection 6 pour transmettre auxdits moyens électroniques de commande, en réponse à ladite détection de l'activation du dispositif d'antiblocage de sécurité 2, un signal électrique de coupure 20 présentant une valeur prédéterminée à la place dudit signal électrique d'accélérateur 10 présentant une valeur variable.

Ladite valeur prédéterminée est établie pour que les moyens électroniques de commande auxquelles le signal électrique de coupure 20 est transmis désactivent en réponse le système de freinage régénératif, indépendamment de la position dudit accélérateur.

Avantageusement, comme déjà exposé dans ce qui précède en relation avec le kit de conversion selon l'invention, le dispositif d'antiblocage de sécurité 2 qui équipe initialement le véhicule thermique à transformer comprend au moins un composant (de préférence un composant hydraulique, par exemple une électrovanne ou une pompe) conçu pour évoluer entre au moins un premier et un deuxième état de fonctionnement, ledit premier état de fonctionnement étant atteint en réponse à l'activation du dispositif d'antiblocage de sécurité 2. Comme exposé précédemment, ledit composant est alimenté électriquement par une ligne d'alimentation 7 déjà présente dans le véhicule thermique et au sein de laquelle circule un courant électrique que le passage du deuxième état de fonctionnement au premier état de fonctionnement fait varier.

Les moyens de détection 6 reliés au dispositif d'antiblocage de sécurité 2 dans le cadre du procédé selon l'invention comprennent avantageusement un capteur de courant conçu pour mesurer le courant électrique circulant au sein de la ligne d'alimentation 7 pour détecter ainsi le passage dudit deuxième état de fonctionnement audit premier état de fonctionnement.

Selon un mode de réalisation alternatif, ou complémentaire, le véhicule à motorisation thermique objet du procédé de transformation selon l'invention comprend un bus CAN 8 auquel est connecté le dispositif d'antiblocage de sécurité 2. Dans ce cas, les moyens de détection 6 installés dans le cadre du procédé selon l'invention comprennent avantageusement des moyens électroniques de traitement conçus pour analyser des trames de données transitant au sein dudit bus CAN 8, afin de détecter l'activation du dispositif d'antiblocage de sécurité 2.

L'invention permet ainsi, de manière extrêmement simple, rapide et bon marché, de transformer un véhicule thermique en un véhicule électrique, tout en conservant à l'identique le maximum de l'équipement initial du véhicule thermique, et notamment son dispositif d'antiblocage de sécurité 2 et le circuit de freinage associé. Grâce à son caractère universel, l'invention peut être déployée à une échelle industrielle, et autorise des opérations standardisées qui nécessitent un minimum de compétences, notamment en électronique et informatique embarquée.

## Revendications

1. Kit de conversion pour transformer un véhicule routier à motorisation thermique en véhicule routier à motorisation électrique, ledit véhicule routier à motorisation thermique comprenant au moins un organe (1) d'émission d'un signal électrique d'accélérateur (10) présentant une valeur qui varie en fonction de la position d'un accélérateur mobile actionnable par l'utilisateur pour faire accélérer ledit véhicule, et un dispositif d'antiblocage de sécurité (2) activable et désactivable,
ledit kit de conversion étant **caractérisé en ce qu'**il comprend au moins :
- un système de freinage régénératif activable et désactivable,
- des moyens électroniques de commande auxquels est transmis ledit signal électrique d'accélérateur (10) pour qu'ils commandent l'activation ou la désactivation dudit système de freinage régénératif en fonction de ladite valeur dudit signal électrique d'accélérateur (10),
- des moyens de détection (6) conçus pour être reliés audit dispositif d'antiblocage de sécurité (2) afin de détecter l'activation de ce dernier,
- des moyens électroniques de contrôle (9) reliés auxdits moyens de détection (6) pour transmettre auxdits moyens électroniques de commande, en réponse à ladite détection de l'activation du dispositif d'antiblocage de sécurité (2), un signal électrique de coupure (20) présentant une valeur prédéterminée à la place dudit signal électrique d'accélérateur (10) présentant une valeur variable, ladite valeur prédéterminée étant établie pour que lesdits moyens électroniques de commande auxquels le signal électrique de coupure (20) est transmis désactivent en réponse ledit système de freinage régénératif, indépendamment de la position dudit accélérateur.

2. Kit de conversion selon la revendication précédente **caractérisé en ce que** lesdits moyens électroniques de contrôle (9) sont conçus pour être reliés à un organe de commande de freinage du véhicule actionnable par un utilisateur, de façon à ne transmettre auxdits moyens électroniques de commande ledit signal électrique de coupure (20) à la place dudit signal électrique d'accélérateur (10) que si ledit organe de commande de freinage est actionné par l'utilisateur.

3. Kit de conversion selon l'une quelconque des revendications précédentes **caractérisé en ce qu'**il inclut en outre d'une part une batterie et d'autre part une machine électrique (3) qui est destinée à être reliée électriquement à ladite batterie et est conçue pour se trouver alternativement, sous l'influence d'un contrôleur électronique (4), soit dans une configuration motrice dans laquelle elle est alimentée électriquement par la batterie pour assurer la propulsion dudit véhicule, soit dans une configuration génératrice dans laquelle elle alimente électriquement la batterie pour la recharger tout en faisant ralentir ledit véhicule, lesdits machine électrique (3) et contrôleur électronique (4) contribuant à former ledit système de freinage régénératif, soit dans une configuration de roue libre dans laquelle la machine électrique (3) est déconnectée électriquement de la batterie, ledit contrôleur électronique (4) étant conçu pour commander le maintien de ladite machine électrique (3) en configuration génératrice tant que le système de freinage régénératif est activé.

4. Kit de conversion selon l'une quelconque des revendications précédentes **caractérisé en ce que** lesdits moyens électroniques de commande sont conçus pour désactiver ledit système de freinage régénératif en réponse à l'atteinte, par ladite valeur dudit signal électrique d'accélérateur (10), d'une valeur seuil correspondant à l'occupation, par ledit accélérateur mobile, sous l'effet d'un actionnement prédéterminé de l'utilisateur, d'une position neutre associée à un déplacement en roue libre du véhicule, ladite valeur prédéterminée du signal électrique de coupure (20) étant égale à ladite valeur seuil.

5. Kit de conversion selon l'une quelconque des revendications précédentes **caractérisé en ce que** lesdits moyens électroniques de contrôle (9) incluent un sélecteur relié auxdits moyens de détection (6) pour autoriser lesdits moyens électroniques de commande à accéder, pour commander l'activation ou la désactivation du système de freinage régénératif, soit au signal électrique d'accélérateur (10), soit au signal électrique de coupure (20), selon que le dispositif d'antiblocage de sécurité (2) est désactivé ou activé.

6. Kit de conversion selon l'une quelconque des revendications précédentes, **caractérisé en ce que** ledit dispositif d'antiblocage de sécurité (2) comprend au moins un composant conçu pour évoluer entre au moins un premier et un deuxième état de fonctionnement, ledit premier état de fonctionnement étant atteint en réponse à l'activation dudit dispositif d'antiblocage de sécurité (2), ledit composant étant alimenté électriquement par une ligne d'alimentation (7) au sein de laquelle circule un courant électrique que le passage du deuxième état de fonctionnement au premier état de fonctionnement fait varier, lesdits moyens de détection (6) comprenant :
- un capteur de courant conçu pour mesurer ledit courant électrique circulant au sein de la ligne d'alimentation pour détecter ainsi le passage dudit deuxième état de fonctionnement audit premier état de fonctionnement, et/ou
- des moyens électroniques de traitement conçus pour analyser des trames de données transitant au sein d'un bus CAN (8) auquel est connecté ledit dispositif d'antiblocage de sécurité (2).

7. Kit de conversion selon la revendication précédente, **caractérisé en ce que** ledit capteur de courant est un capteur en boucle ouverte à effet Hall.

8. Véhicule routier à motorisation électrique obtenu par transformation d'un véhicule routier à motorisation thermique, ledit véhicule routier à motorisation électrique comprenant au moins un organe (1) d'émission d'un signal électrique d'accélérateur (10) présentant une valeur qui varie en fonction de la position d'un accélérateur mobile actionnable par l'utilisateur pour faire accélérer ledit véhicule routier à motorisation électrique, et un dispositif d'antiblocage de sécurité (2) activable et désactivable, ledit véhicule routier électrique étant **caractérisé en ce qu'**il est pourvu d'un kit de conversion selon l'une quelconque des revendications précédentes, et dont les moyens de détection (6) sont reliés audit dispositif d'antiblocage de sécurité (2) afin de détecter l'activation de ce dernier.

9. Procédé de transformation d'un véhicule routier à motorisation thermique en véhicule routier à motorisation électrique, ledit véhicule routier à motorisation thermique comprenant au moins un moteur thermique, un organe (1) d'émission d'un signal électrique d'accélérateur présentant une valeur qui varie en fonction de la position d'un accélérateur mobile actionnable par l'utilisateur pour faire accélérer ledit véhicule, et un dispositif d'antiblocage de sécurité (2) activable et désactivable, ledit procédé étant **caractérisé en ce qu'**il comprend les étapes suivantes :
- ledit moteur thermique est retiré du véhicule routier à motorisation thermique,
- un système de freinage régénératif activable et désactivable est installé dans le véhicule routier dépourvu du moteur thermique,
- des moyens électroniques de commande sont installés dans le véhicule routier et connectés au moins audit organe (1) d'émission du signal électrique d'accélérateur (10) pour que ce dernier leur soit transmis, lesdits moyens électroniques de commande étant conçus pour commander l'activation ou la désactivation dudit système de freinage régénératif en fonction de ladite valeur dudit signal électrique d'accélérateur (10),
- des moyens de détection (6) sont reliés audit dispositif d'antiblocage de sécurité (2) afin de détecter l'activation de ce dernier,
- des moyens électroniques de contrôle (9) sont reliés auxdits moyens de détection (6) pour transmettre auxdits moyens électroniques de commande, en réponse à ladite détection de l'activation du dispositif d'antiblocage de sécurité (2), un signal électrique de coupure (20) présentant une valeur prédéterminée à la place dudit signal électrique d'accélérateur (10) présentant une valeur variable, ladite valeur prédéterminée étant établie pour que lesdits moyens électroniques de commande auxquels le signal électrique de coupure (20) est transmis désactivent en réponse ledit système de freinage régénératif, indépendamment de la position dudit accélérateur.

10. Procédé de transformation selon la revendication précédente **caractérisé en ce que** ledit dispositif d'antiblocage de sécurité (2) comprend au moins un composant conçu pour évoluer entre au moins un premier et un deuxième état de fonctionnement, ledit premier état de fonctionnement étant atteint en réponse à l'activation dudit dispositif d'antiblocage de sécurité (2), ledit composant étant alimenté électriquement par une ligne d'alimentation au sein de laquelle circule un courant électrique que le passage du deuxième état de fonctionnement au premier état de fonctionnement fait varier, lesdits moyens de détection (6) comprenant un capteur de courant conçu pour mesurer ledit courant électrique circulant au sein de la ligne d'alimentation pour détecter ainsi le passage dudit deuxième état de fonctionnement audit premier état de fonctionnement.

11. Procédé de transformation selon la revendication 9 ou 10 **caractérisé en ce que caractérisé en ce que** ledit véhicule à motorisation thermique comprend un bus CAN (8) auquel est connecté ledit dispositif d'antiblocage de sécurité (2), lesdits moyens de détection (6) comprenant des moyens électroniques de traitement conçus pour analyser des trames de données transitant au sein dudit bus CAN (8).
